# EUROPÄISCHE PATENTSCHRIFT

(11) **EP 0 495 196 B1**
(45) Veröffentlichungstag und Bekanntmachung des Hinweises auf die Patenterteilung: **21.08.1996**
(21) Anmeldenummer: 91121019.3
(22) Anmeldetag: 07.12.1991
(51) Int. Cl.: G07B 17/00, G07F 7/08

(54) **Verfahren und Anordnung zum Versenden elektronisch gespeicherter Briefinhalte**
Method and device for sending electronically memorised letter contents
Procédé et dispositif pour expédier le contenu de lettres mémorisé électroniquement

(30) Priorität: 17.01.1991 DE 4101444
(43) Veröffentlichungstag der Anmeldung: 22.07.1992
(73) Patentinhaber: Francotyp-Postalia Aktiengesellschaft & Co., 16547 Birkenwerder (DE)
(72) Erfinder: Dietrich, Klaus, W-1000 Berlin 28 (DE); Günther, Stephan, W-1000 Berlin 28 (DE); Knoth, Norbert, W-1000 Berlin 41 (DE); Miehe, Friedrich-Viktor, W-1000 Berlin 28 (DE); Thiel, Wolfgang, Dr., W-1000 Berlin 61 (DE)

(56) Entgegenhaltungen:
- EP-A- 0 193 635
- EP-A- 0 264 502
- EP-A- 0 338 108
- FR-A- 2 613 158
- US-A- 4 106 060

## Beschreibung

Die Erfindung bezieht sich auf ein Verfahren und eine Anordnung zum Versenden elektronisch gespeicherter Briefinhalte und/oder Daten, in flachen elektronischen Informationsträgern, wie beispielsweise Chipkarten, die einem postalischen Freimachungszwang unterliegen.

Es ist bereits in der Literatur vorgeschlagen worden, Chipkarten als elektronische Postkarten einzusetzen (Michael Hegenbarth: Was sind Chipkarten, ntz Bd. 43 1990, Heft 10, Seiten 714 bis 717). In Verbindung mit einer Frankiereinrichtung müssen aber weitergehende Schritte realisiert werden. Zwar ist der Gebrauch von einer Chipkarte in Verbindung mit einem Wertdruck-Abrechnungsystem aus DE 36 13 007 Al bekannt, jedoch dort nur zu Abrechnungszwecken, d.h. quasi als Alternative zur Wertkarte. Es ist außerdem aus der EP 373 972 A2 bekannt, durch das Fenster eines Kuverts hindurch von einem kuvertierten Blatt solche zum Versand relevanten Daten zu lesen, jedoch ist hierbei ein hoher Aufwand erforderlich, da ein optischer Leser und eine Bildauswertung nötig sind.

Elektronisch gespeicherte, gegebenenfalls zusätzlich codierte Briefinhalte, die beispielsweise von einem Personalcomputer über eine an diesen angeschlossene Schreib-Leseeinrichtung auf eine Chipkarte ausgegeben und in dieser gespeichert werden, können in herkömmlicher Form in einem Umschlag versendet werden. Der Versand von Chipkarten kann der Übermittlung von Informationen dienen, aber auch der einmaligen Zustellung der Chipkarte an Personen, um sie diesen verfügbar zu machen. Zum Versenden von Serienbriefen sind abhängig von der Sende- bzw. Beförderungsart und der Adresse unterschiedliche Frankierwerte zur Freimachung erforderlich, die in herkömmlicher Weise durch Bedienungspersonal in eine Frankiermaschine einzugeben wären.

Der Erfindung lag die Aufgabe zugrunde, ein Verfahren und eine Anordnung zu entwickeln, die das automatische Frankieren von Versandstücken mit elektronisch gespeicherten Briefinhalten und/oder Daten ermöglichen.

Die Aufgabe wird mit der Gesamtheit an Merkmalen der Ansprüche 1 und 9 gelöst. Erfindungsgemäß ist vorgesehen, daß der flache elektronische Informationsträger mehrere Speicherbereiche aufweist, von denen zumindest ein Speicher Versanddaten enthält, daß die Versanddaten mittels eines Lese-Schreibmoduls ausgelesen werden, daß die Versanddaten mit einer gespeicherten Portotabelle zum Errechnen des für den Transport des Informationsträgers anfallenden Frankierwertes verknüpft werden, daß der für den Informationsträger errechnete Frankierwert durch eine Frankiereinrichtung gebucht wird und daß auf dem Versandstück ein Frankierabdruck vorgenommen wird.

Die Versanddaten bestehen aus der Adresse des Empfängers und können darüber hinaus auch die Versandart, wie Luftpost, Eilbrief etc., und das Werbefeld umfassen.

Weitere vorteilhafte Merkmale sind Gegenstand der Unteransprüche.

Der Vorteil der Erfindung liegt in einer automatischen Frankierung und Versendung von Trägern elektronisch gespeicherter Briefinhalte.

Anhand einer Zeichnung wird die Erfindung nachfolgend näher erläutert.

Der beispielsweise mit einem Personalcomputer PCA des Absenders erzeugte Briefinhalt wird über ein Schreib-Lesemodul SL, das über eine Standardschnittstelle mit dem PCA verbunden ist, in einen flachen Informationsträger IC, z. B. eine Chipkarte, übermittelt. Derartige Informationsträger sind beispielsweise als elektronische Notizbücher, Patientenpaß oder Abbuchungskarte bekannt. Der Briefinhalt wird in einem Speicherbereich 3 des Informationsträger IC gespeichert. Dieser Briefinhalt kann aus Texten, Datenbankauszügen, Programmdateien oder anderen elektronisch speicherbaren Informationen bestehen. In einem Speicherbereich 1 werden die Adreßdaten und ggf. die Versandart gespeichert. In einem weiteren Speicherbereich 2 werden die grafischen Daten des abzudruckenden Werbefeldes gespeichert. Das Schreib-Lesemodul SL kann als separates Gerät ausgeführt, oder im Personalcomputer PCA integriert sein.

Zum Versenden wird der Informationsträger IC einem Lese-Schreibmodul LSA zugeführt. Dieses entnimmt dem Speicherbereich 1 des Informationsträger IC die zum Versand relevanten Daten und überträgt sie an ein Buchungsmittel BM. Das Buchungsmittel BM verknüpft die Versanddaten mit einer gespeicherten Portotabelle PT und verbucht die Portogebühren. Eine Einbeziehung von Gewichtsdaten in die Portoberechnung entfällt, da der Informationsträger IC unabhängig vom Umfang der gespeicherten Information stets das gleiche Gewicht aufweist. Die derart errechneten Gebühren werden zusammen mit den Daten für Versandart und Werbefeld an das zum Drucken des Frankierabdruckes genutzte Gerät übertragen.

Bei konventioneller Versendung des Informationsträgers IC mit einem Briefkuvert wird mittels des Druckwerkes DW ein Frankierabdruck auf dem Umschlag ausgeführt. Eine angeschlossene Zuführ-, Kuvertier- und Schließstation ZKS dient der weiteren automatischen Verarbeitung.

In einer anderen Ausführungsvariante wird von dem Druckwerk DW ein Frankierstreifen bedruckt, der auf den Informationsträger IC haftend aufgebracht wird. In einer weiteren Ausführungsvariante ist das direkte Bedrucken eines dafür präparierten Teiles der Oberfläche des Informationsträgers IC mit den Frankierdaten vorgesehen.

Buchungsmittel BM, Portotabelle PT und das Druckwerk DW bilden funktionell eine Frankiereinrichtung FE. Diese Frankiereinrichtung FE und die Lese-Schreibeinrichtung LSA können als separate Geräte ausgeführt oder in einem gemeinsamen Gehäuse integriert sein.

In einer speziellen Ausführungsvariante wird die zum Berechnen des Frankierwertes ausgelesene Adreßinformation zusätzlich zu dem Frankierabdruck ausgedruckt. Die Frankiereinrichtung FE muß für diesen Zweck mit einem Druckwerk ausgerüstet sein, das zum Drucken einer Adresse geeignet ist. Dafür kann beispielsweise ein Thermotransferdruckwerk mit einer Druckbreite, die sowohl den Frankier- als auch den Adreßabdruck einschließt, verwendet werden. Alternativ ist auch die Übertragung der Adreßdaten an ein spezielles Adreßdruckgerät möglich.

Der Transportdienst befördert den Informationsträger IC zum Empfänger. Dort wird mittels eines an einen Personalcomputer PCE gekoppeltes Lese-Schreibmoduls LSE der Informationsinhalt aus dem Informationsträger IC gelesen und steht über den Personalcomputer PCE dem Adressaten zur Verfügung.

Eine Ausgestaltung der Erfindung nutzt die bekannten Merkmale tragbarer IC- oder Chipkarten mit Verschlüsselung zur Bewältigung von Transaktionen, bei denen durch z.B. einen privaten Schlüssel oder ein Kennwort und einen weiteren, öffentlichen Schlüssel eine Authentizität des Nutzers gegenüber dem System erzeugt wird und dadurch der Zugang zum System freigegeben wird (DE-33 19 919 A1). Der Zugriff auf die Adreßdaten kann auf diese Weise vom Zugriff auf den gespeicherten Briefinhalt separiert werden.

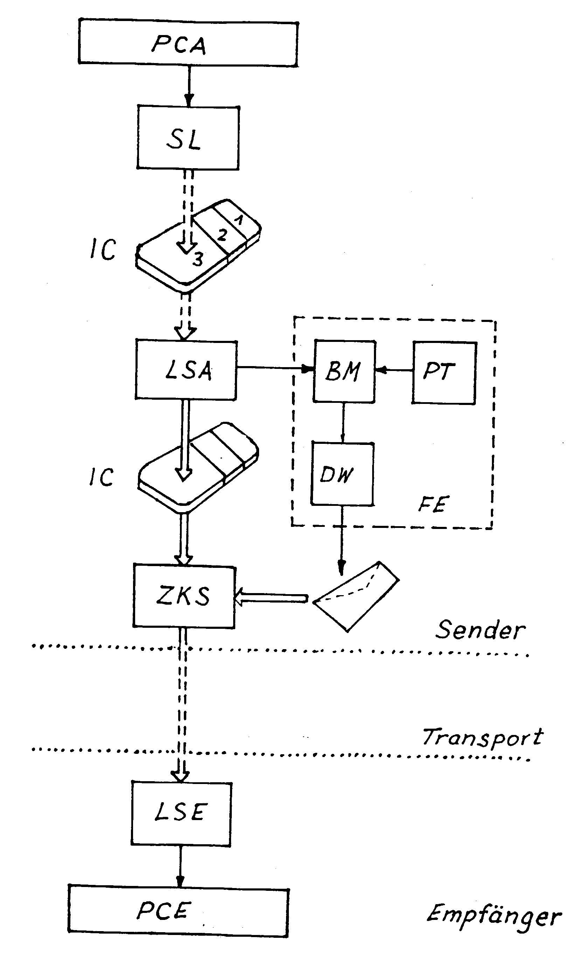

## Patentansprüche

1. Verfahren zum Versenden elektronisch gespeicherter Briefinhalte und/oder Daten in flachen Informationsträgern (IC), die einem postalischen Freimachungszwang unterliegen, **dadurch gekennzeichnet,**
a) daß der flache Informationsträger (IC) ein elektronischer Informationsträger (IC) mit mehreren Speicherbereichen (1, 2, 3) ist, wobei zumindest ein Speicherbereich (1) Versanddaten enthält,
b) daß die Versanddaten mittels eines Lese/Schreibmoduls (LSA) aus dem vorgenannten elektronischen Informationsträger (IC) ausgelesen werden,
c) daß die Versanddaten mit einer gespeicherten Portotabelle (PT) einer Frankiereinrichtung zum Errechnen des für den Transport des elektronischen Informationsträgers (IC) anfallenden Frankierwertes verknüpft werden,
d) daß der für den elektronischen Informationsträger (IC) errechnete Frankierwert durch ein Buchungsmittel (BM) der Frankiereinrichtung (FE) gebucht und
e) daß auf jedem zum Versand des betreffenden elektronischen Informationsträgers (IC) bestimmten Versandstück ein Frankieraufdruck entsprechend des errechneten Frankierwertes vorgenommen wird.

2. Verfahren nach Anspruch 1, **dadurch gekennzeichnet,** daß der elektronische Informationsträger mehrere Speicherbereiche (1,2,3) mit unterschiedlichen Zugriffsberechtigungen aufweist.

3. Verfahren nach Anspruch 1 oder 2, **dadurch gekennzeichnet,** daß der elektronische Informationsträger eine Chipkarte ist.

4. Verfahren nach Anspruch 1 bis 3, **dadurch gekennzeichnet,** daß die Frankiereinrichtung (FE) den Frankierabdruck auf einen Umschlag oder auf einen Streifen druckt.

5. Verfahren nach Anspruch 1 bis 3, **dadurch gekennzeichnet,** daß die Frankiereinrichtung (FE) den Frankierabdruck auf einen Teil der Oberfläche des Informationsträgers (IC) druckt.

6. Verfahren nach Anspruch 1 bis 3, **dadurch gekennzeichnet,** daß aus dem Speicherbereich (1) des Informationsträgers (IC) die vollständigen Adreßdaten ausgelesen und ausgedruckt werden.

7. Verfahren nach Anspruch 6, **dadurch gekennzeichnet,** daß eine zum Drucken von alphanumerischen Zeichen geeignete Frankiereinrichtung (FE) den Adreßaufdruck durchführt.

8. Verfahren nach Anspruch 6, **dadurch gekennzeichnet,** daß die Adreßdaten an eine spezielle Adreßdruckeinrichtung übergeben und an dieser ausgedruckt werden.

9. Anordnung, zur Durchführung des Verfahrens nach Anspruch 1, zum Versenden elektronisch gespeicherter Briefinhalte und/oder Daten in flachen Informationsträgern, die einem postalischen Freimachungszwang unterliegen, mit einer einen Drucker aufweisenden Frankiereinrichtung, dadurch **gekennzeichnet,**
- daß ein Schreib-/Lesemodul (SL) für einen flachen elektronischen Informationsträger (IC) an einen Personalcomputer (PCA) angeschlossen ist, wobei der Informationsträger mehrere Speicherbereiche aufweist,
- daß Mittel im Personalcomputer (PCA) vorgesehen sind, damit die Briefinhalte und/order Daten und zugehörige Versanddaten aus dem Personalcomputer (PCA) mittels des Schreib-/Lesemoduls (SL) in einen Speicher des vorgenannten elektronischen Informationsträger (IC) übertragen werden,
- daß ein Lese-Schreibmodul (LSA) an die Frankiereinrichtung (FE) angeschlossen ist und in der Frankiereinrichtung (FE) Mittel vorgesehen sind, die die zugehörigen Versanddaten vom Speicher (1) des vorgenannten elektronischen Informationsträgers (IC) in die Frankiereinrichtung (FE) übertragen, und
- daß die angeschlossene Frankiereinrichtung (FE) Buchungsmittel (BM) und eine Portotabelle (PT) aufweist, um auf der Basis vorgenannter Versanddaten die Portogebühren zum Versenden des Informationsträgers (IC) zu verbuchen und weitere Mittel aufweist, um Steuerdaten zum Drucken eines Frankierabdruckes an den Drucker (DW) zu übertragen, um auf jedem zum Versand des betreffenden Informationsträgers (IC) bestimmten Versandstück einen Frankierabdruck vorzunehmen.

10. Anordnung nach Anspruch 9, **dadurch gekennzeichnet,** daß das Schreib-/Lesemodul (SL) in den Personalcomputer (PCA) integriert ist.

11. Anordnung nach Anspruch 9, **dadurch gekennzeichnet,** daß das Lese-Schreibmodul (LSA) und die Frankiereinrichtung (FE) in einem Gerät integriert sind.

12. Anordnung nach Anspruch 9, **dadurch gekennzeichnet,** daß Mittel vorgesehen sind, die die zugehörigen Versanddaten vom Lese-/Schreibmodul (LSA) an eine Frankiereinrichtung (FE) in vorgenannter Weise übertragen und zusätzlich die Adreßdaten an eine spezielle Adreßdruckeinrichtung übergeben, damit die Adreßdaten von der Adreßdruckeinrichtung auf ein Versandstück (Kuvert) ausgedruckt werden.

13. Anordnung nach Anspruch 9, **dadurch gekennzeichnet,** daß Mittel vorgesehen sind, die die zugehörigen Versanddaten, einschließlich der Adreßdaten, vom Lese-/Schreibmodul (LSA) an eine Frankiereinrichtung (FE) übertragen und daß der Drucker (DW) der Frankiereinrichtung (FE) dazu ausgebildet ist, um zusätzlich zum Frankierabdruck die Adresse auf das Versandstück aufzudrucken.

14. Anordnung nach Anspruch 9, **dadurch gekennzeichnet,** daß der elektronische Informationsträger eine Chipkarte ist.

## Claims

1. Process for dispatching electronically stored contents of letters and/or data in a flat information carrier (IC) which is subject to postal franchising, **characterized by the fact that**
a) The flat information carrier (IC) is an electronic information carrier (IC) with several memory areas (1, 2, 3), wherebyh at least one memory area (1) contains dispatch information,
b) The dispatch data are read out of the above-mentioned infonnation carrier (IC) by means of a read/write module (LSA)
c) The dispatch data are linked to a stored postage table (PT) of a franking device in order to calculate the postage due for transporting the electronic information carrier (IC)
d) The postage calculated for the electronic information carrier (IC) is booked by means booking medium (BM) of the franking device (FE) and
e) A postage franking in accordance with the postage calculated is effected on the dispatch part of the relevant electronic information carrier (IC).

2. Process in accordance with Requirement 1, **characterized by the fact that** the electronic information carrier has several memory areas (1,2,3) with different access rights.

3. Process in accordance with Requirement 1 or 2, **characterized by the fact that** the electronic information carrier is a chip board.

4. Process in accordance with Requirements 1 to 3, **characterized by the fact that** the franking device (FE) prints the postage onto the envelope or a strip.

5. Process in accordance with Requirements 1 to 3, **characterized by the fact that** the franking device (FE) prints the postage on a part of the surface of the information carrier (IC).

6. Process in accordance with Requirements 1 to 3, **characterized by the fact that** the complete address data are read out of the memory area (1) of the information carrier (IC) and printed out.

7. Process in accordance with Requirement 6, **characterized by the fact that** printing the address is effected by a franking device (FE) capable of printing alphanumerical characters.

8. Process in accordance with Requirement 6, **characterized by the fact that** the address data are transferred to a special address printing device and printed out by it.

9. Arrangement for carrying out the process in accordance with Requirement 1 for dispatching electronically stored contents of letters and/or data in flat infonnation carriers which are subject to postal franchising with a franking device having a printer, **characterized by the fact that**
- A write/read module (SL) for a flat electronic infonnation carrier (IC) is connected to a personal computer (PCA) whereby the information carrier has several memory areas.
- There are means in the personal computer (PCA) which ensure that the contents of the letter and/or the data and the relevant dispatch data are transferred from the personal computer (PCA) by means of the write/read module (SL) into a memory of the above-mentioned electronic information carrier (IC).
- A read/write module (LSA) is connected to the franking device (FE) and that the franking device (FE) has means which transfer the corresponding dispatch data from the memory (1) of the above-mentioned electronic infonnation carrier (IC) to the franking device (FE) and
- The connected franking device (FE) has booking means (BM) and a postage table (PT) in order to book the postage for dispatching the information carrier (IC) on the basis of the above-mentioned dispatch data and has further means of transferring the control data for printing a franking printout to the printer (DW) in order to effect the franking on the dispatch piece to be used for dispatching the relevant infonnation carrier (IC).

10. Arrangement in accordance with Requirement 9, **characterized by the fact that** the write/read module (SL) is integrated in the personal computer (PCA).

11. Arrangement in accordance with Requirement 9, **characterized by the fact that** the read/write module (LSA) and the franking device (FE) are integrated in one device.

12. Arrangement in accordance with Requirement 9, **characterized by the fact that** means are provided to ensure that the corresponding dispatch data are transferred as stipulated above to a franking device (FE) and that additionally the address data are transferred to a special printing device so that the address data are printed out on a dispatch piece (envelope).

13. Arrangement in accordance with Requirement 9, **characterized by the fact that** means are provided to ensure that the corresponding dispatch data, including the address data, are transferred from the read/write module (LSA) to a franking device (FE) and that the printer (DW) of the franking device (FE) are capable of printing the address onto the dispatch piece in addition to the postage printout.

14. Arrangement in accordance with Requirement 9, **characterized by the fact that** the electronic information carrier is a chip board.

## Revendications

1. Procédé pour l'envoi de contenus de lettre et/ou données mémorisés électroniquement dans des supports d'informations plats (IC) qui sont soumis à un affranchissement postal obligatoire, caractérisé en ce que
a) le support d'informations plat (IC) est un support d'informations électronique (IC) disposant de plusieurs zones de mémoire (1, 2, 3), une zone de mémoire (1) au moins contenant des donnée d'envoi,
b) les données d'envoi sont lues au moyen d'un module de lecture/enregistrement (LSA) à partir du support d'informations électronique (IC) susnommé,
c) les données d'envoi sont reliées à un barème d'affranchissement (PT) d'un dispositif d'affranchissement pour calculer la valeur d'affranchissement encourue pour le transport du support d'informations électronique,
d) la valeur d'affranchissement calculée pour le support d'informations électronique (IC) est comptabilisée par l'intermédiaire d'un moyen de comptabilité (BM) du dispositif d'affranchissement (FE) et en ce que
e) une marque d'affranchissement est imprimée sur chaque pièce d'expédition destinée à l'envoi du support d'informations électronique (IC) concerné en fonction de la valeur d'affranchissement.

2. Procédé selon la revendication 1, caractérisé en ce que le support d'informations électronique présente plusieurs zones de mémoire (1,2,3) avec différentes autorisations d'accès.

3. Procédé selon la revendication 1 ou 2, caractérisé en ce que le support d'informations est une carte à puce.

4. Procédé selon la revendication 1 à 3, caractérisé en ce que le dispositif d'affranchissement (FE) imprime la marque d'affranchissement sur une enveloppe ou sur une bande.

5. Procédé selon la revendication 1 à 3, caractérisé en ce que le dispositif d'affranchissement (FE) imprime la marque d'affranchissement sur une partie de la surface du support d'informations (IC).

6. Procédé selon la revendication 1 à 3, caractérisé en ce que les données complètes relatives aux adresses sont lues et imprimées à partir de la zone de mémoire (1) du support d'information (IC).

7. Procédé selon la revendication 6, caractérisé en ce qu'un dispositif d'affranchissement (FE) approprié pour l'impression de signes alphanumériques réalise l'impression de l'adresse.

8. Procédé selon la revendication 6, caractérisé en ce que les données relatives aux adresses sont transmises à un dispositif spécial d'impression d'adresses et sont imprimées sur celui-ci.

9. Disposition, pour la réalisation du procédé selon la revendication 1, pour l'envoi de contenus de lettre et/ou données mémorisés électroniquement dans des supports d'informations plats, qui sont soumis à un affranchissement postal obligatoire, avec un dispositif d'affranchissement présentant une imprimante, caractérisée en ce qu'un module d'enregistrement/lecture (SL) pour un support d'informations électronique plat (IC) est branché sur un micro-ordinateur (PCA), le support d'informations présentant plusieurs zones de mémoire,
- en ce que des moyens sont prévus dans le micro-ordinateur (PCA) afin que les contenus de lettre et/ou données et les données d'envoi correspondantes soient transmis du micro-ordinateur (PCA), au moyen du module d'enregistrement/lecture (SL), dans une mémoire du support d'informations électronique (IC) susnommé,
- en ce qu'un module de lecture/enregistrement (LSA) est branché sur le dispositif d'affranchissement (FE) et que, dans le dispositif d'affranchissement (FE), on prévoit des moyens qui transmettent les données d'envoi correspondantes de la mémoire (1) du support d'informations électronique (IC) susnommé dans le dispositif d'affranchissement (FE), et
- en ce que le dispositif d'enregistrement branché (FE) présente un moyen de comptabiliser (BM) et un barème d'affranchissement (PT) afin de comptabiliser, sur la base des données d'envoi susnommées, les taxes d'affranchissement pour l'envoi du support d'informations (IC), et présente d'autres moyens pour transmettre les données de commande pour l'impression d'une marque d'affranchissement à l'imprimante (DW) afin d'exécuter une marque d'affranchissement sur chaque pièce d'expédition destinée à l'envoi du support d'informations (IC) concerné.

10. Disposition selon la revendication 9, caractérisée en ce que le module d'enregistrement/lecture (SL) est intégré dans le micro-ordinateur (PCA).

11. Disposition selon la revendication 9, caractérisée en ce que le module lecture/enregistrement (LSA) et le dispositif d'affranchissement (FE) sont intégrés dans un appareil.

12. Disposition selon la revendication 9, caractérisée en ce qu'on prévoit des moyens qui transmettent les données d'envoi correspondantes du module de lecture/enregistrement (LSA) à un dispositif d'affranchissement (FE) dans la manière susnommée, et transmettent en plus les données relatives aux adresses à un dispositif spécial d'impression d'adresses afin que les données relatives aux adresses soient imprimées sur une pièce d'expédition (enveloppe).

13. Disposition selon la revendication 9, caractérisée en ce qu'on prévoit des moyens qui transmettent les données d'envoi correspondantes, y compris les données relatives aux adresses, du module de lecture/enregistrement (LSA) à un dispositif d'affranchissement (FE), et que l'imprimante (DW) du dispositif d'affranchissement (FE) est conçue afin d'imprimer, en plus de la marque d'affranchissement, l'adresse sur la pièce d'expédition.

14. Disposition selon la revendication 9, caractérisée en ce que le support d'informations électronique est une carte à puce.
